# EUROPEAN PATENT APPLICATION

(11) **EP 2 080 916 A1**
(43) Date of publication of application: **22.07.2009**
(21) Application number: 08150279.1
(22) Date of filing: 15.01.2008
(51) Int. Cl.: F16B 25/00

(54) **Self-tapping screw made of two materials**

(71) Applicant: Wu, Cheng-Yuan, Tainan County (TW)
(72) Inventor: Wu, Cheng-Yuan, Tainan County (TW)
(74) Representative: Viering, Jentschura & Partner

(57) **Abstract**

A self-tapping screw (4) made of two materials includes a first shank (40) and a second shank (41). The first shank (40) made of stainless steel is provided with a locking head (400) with a tool locking recess (401) and a threaded member (42), having its lower end bored with a circular combining recess (402). The second shank (41) made of low carbon steel, low carbon alloy steel or other steel suitable for carburizing and hardening treatment is provided with a threaded member (42) and a cutting member (43) and has its upper end secured with polygonal combining member (412) to be combined with the combining recess (401) of the first shank (40). The cutting member (43) functions to cut a work piece and the threaded member (42) will be locked therein. The stainless steel locking head (400) exposed out of the work piece is uneasily corroded quickly by acid and alkaline in external environment, enabling the self-tapping screw to be locked in the work piece for long.

## Description

### BACKGROUND OF THE INVENTION

### 1. Field of the Invention

This invention relates to a self-tapping screw made of composite material, particularly to one including a first shank and a second shank. The first shank made of stainless steel is provided with a locking head and has its lower end bored with a combining recess, and the second shank is made of low carbon steel, low carbon alloy steel or other kinds of steel suitable for carburizing and hardening treatment, provided with a threaded member and a cutting member and having its upper end secured with a polygonal combining member to be combined together with the combining recess of the first shank. The cutting member of the second shank functions to cut a work piece and the threaded member is firmly locked in the work piece. The stainless steel locking head of the first shank, exposed to the outside of the work piece, is not easy to be rusted and corroded quickly by acid and alkaline produced in the external environment, thus enabling the self-tapping screw to be locked in the work piece for long.

### 2. Description of the Prior Art

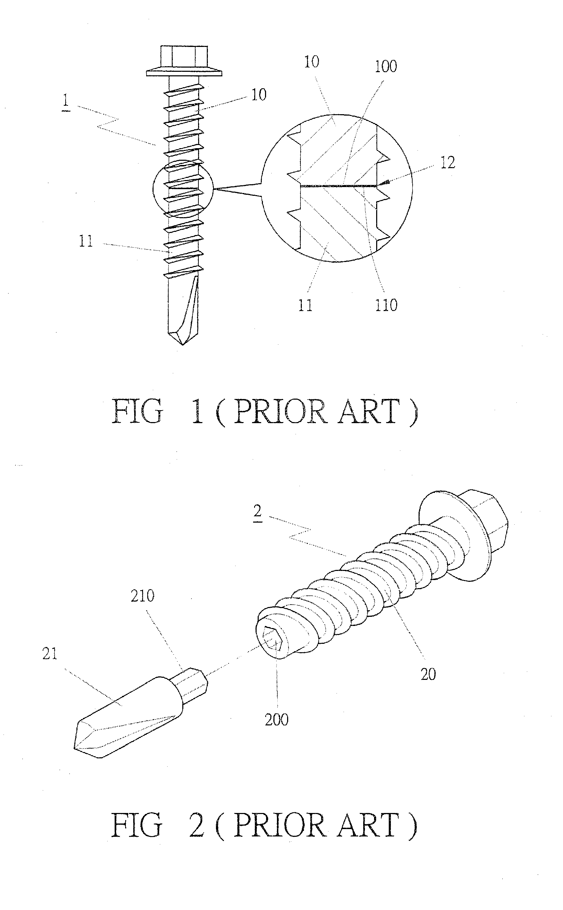

For the present, conventional self-tapping screws sold on the market are made of two different materials. A first kind of conventional self-tapping screw 1, as shown in Fig. 1 includes a first shank 10 and a second shank 11, and the lower end 100 of the first shank 10 and the upper end 110 of the second shank 11 are welded together. The second shank 11 is made of low carbon steel, low carbon alloy steel or other kinds of steel suitable for carburizing and hardening treatment, different from the first shank 10 in material.

However, the first shank 10 and the second shank 11 of the first kind of conventional self-tapping screw, which is made of different materials, are combined together by welding with a complicated and changeful process. Therefore, in the course of locking, the self-drilling screw may be broken from the welded point and fall off due to improper welding, likely to result in dangers in locking of the self-tapping screw.

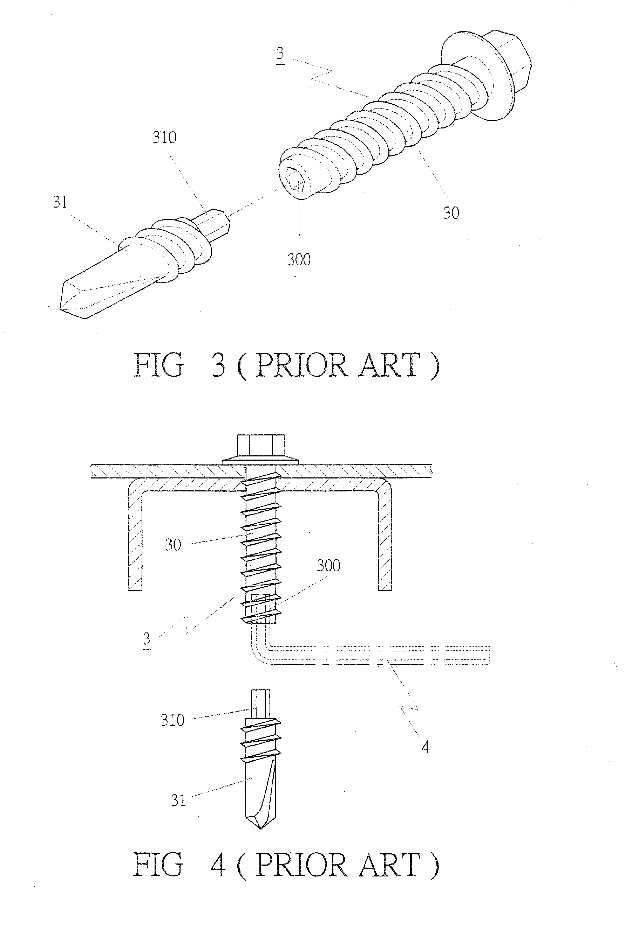

A second and a third kind of conventional self-tapping screw 2 and 3, as shown in Figs. 2 and 3, are respectively composed of a first shank 20, 30 and a second shank 21, 31. The first shanks 20, 30 have their lower end respectively bored with a polygonal combining recess 200, 300, and the second shanks 21, 31 have their upper ends respectively fixed with a polygonal combining member 210, 310, which are respectively corresponding to the polygonal combining recesses 200, 300 in shape. To lock the self-tapping screw in a work piece, firstly, the polygonal combining recess 200, 300 of the first shank 20, 30 and the polygonal combining member 210, 314 of the second shank 21, 31 are combined together by a user. After the self-tapping screw is firmly locked in the work piece, the second shank 21, 31 is removed out and then a hand tool 4 is inserted in the polygonal combining recess 200, 300 to turn around the first shank 20, 30 for adjusting the locking condition of the self-tapping screw, as shown in Fig. 4. The second and third conventional self-tapping screw mentioned above are designed only for enabling a user to conveniently adjust the locking condition of the self-drilling screw; therefore, the first shank and the second shank are unnecessarily made of different materials.

### SUMMARY OF THE INVENTION

The objective of this invention is to offer a self-drilling screw made of composite material, including a first shank and a second shank. The first shank made of stainless steel is formed with a locking head and bored with a combining recess, and the second shank is made of low carbon steel, low carbon alloy steel or other kinds of steel suitable for carburizing and hardening treatment, provided with a combining member to be forcedly combined together with the combining recess of the first shank. Further, the first shank and the second shank are respectively disposed with a threaded member, and the second shank has its lower end formed with a cutting member. Thus, the cutting member of the second shank can function to cut a work piece and the threaded members can be firmly locked in the work piece, and the stainless steel locking head of the first shank, exposed to the outside of the work piece, is not easy to be rusted and corroded by acid and alkaline produced in the external environment, enabling the self-tapping screw to be firmly locked in the work piece for long.

The features of the self-drilling screw in the present invention are described as follows.
1. The first shank of the self-tapping screw is made of stainless steel, having its upper end formed with a locking head and its lower end bored with a combining recess.
2. The second shank of the self-tapping screw is made of low carbon steel, low carbon alloy steel or other kinds of steel suitable for carburizing and hardening treatment, provided with a polygonal combining member to be combined with the combining recess of the first shank. The cutting member at the lower end of the second shank can function to cut a work piece and the threaded member can be firmly locked in the work piece.
3. The first shank and the second shank of the self-tapping screw of this invention are made of different materials.
4. The locking head of the first shank of the self-drilling screw is made of stainless steel; therefore, although exposed to the outside of the work piece, the locking head of the first shank is not easy to be rusted and corroded by acid and alkaline produced in the external environment, able to firmly lock the self-tapping screw in the work piece for a long time.

### BRIEF DESCRIPTION OF DRAWINGS

This invention will be better understood by referring to the accompanying drawings, wherein:
Fig. 1 is a cross-sectional and partial magnified view of a first kind of conventional self-tapping screw;
Fig. 2 is an exploded perspective view of a second kind of conventional self-tapping screw;
Fig. 3 is an exploded perspective view of a third kind of conventional self-tapping screw;
Fig. 4 is cross-sectional view of the third kind of conventional self-tapping screw in an operating condition;
Fig. 5 is an exploded and partial magnified cross-sectional view of a first kind of blank for making a first shank and a second shank blank of a self-tapping screw in the present invention;
Fig. 6 is a perspective and partial magnified cross-sectional view of the first kind of blank for making the first shank blank and the second shank blank of a self-tapping screw after being combined together in the present invention;
Fig. 7 is a partial magnified cross-sectional view of a first preferred embodiment of a self-tapping screw formed of the blank shown in Figs. 5 and 6 in the present invention;
Fig. 8 is a perspective view of the first preferred embodiment of a self-tapping screw formed of the blank shown in Figs. 5 and 6 in the present invention;
Fig. 9 is a perspective view of a second preferred embodiment of a self-tapping screw made of the blank shown in Figs. 5 and 6 in the present invention;
Fig. 10 is a perspective view of a third preferred embodiment of a first shank and a second shank of a self-tapping screw before combined in the present invention;
Fig. 11 is a perspective view of a fourth preferred embodiment of a first shank and a second shank of a self-tapping screw before combined in the present invention;
Fig. 12 is a perspective and partial magnified cross-sectional view of the fourth preferred embodiment of a second shank of a self-tapping screw in the present invention;
Fig. 13 is a perspective and partial magnified cross-sectional view of a fifth preferred embodiment of a second shank of a self-tapping screw in the present invention;
Fig. 14 is a perspective and partial magnified cross-sectional view of a sixth preferred embodiment of a second shank of a self-tapping screw in the present invention; and
Fig. 15 is a perspective and partial magnified cross-sectional view of a seventh preferred embodiment of a second shank of a self-tapping screw in the present invention.

### DETAILED DESCRIPTION OF THE PREFERRED EMBODIMENT

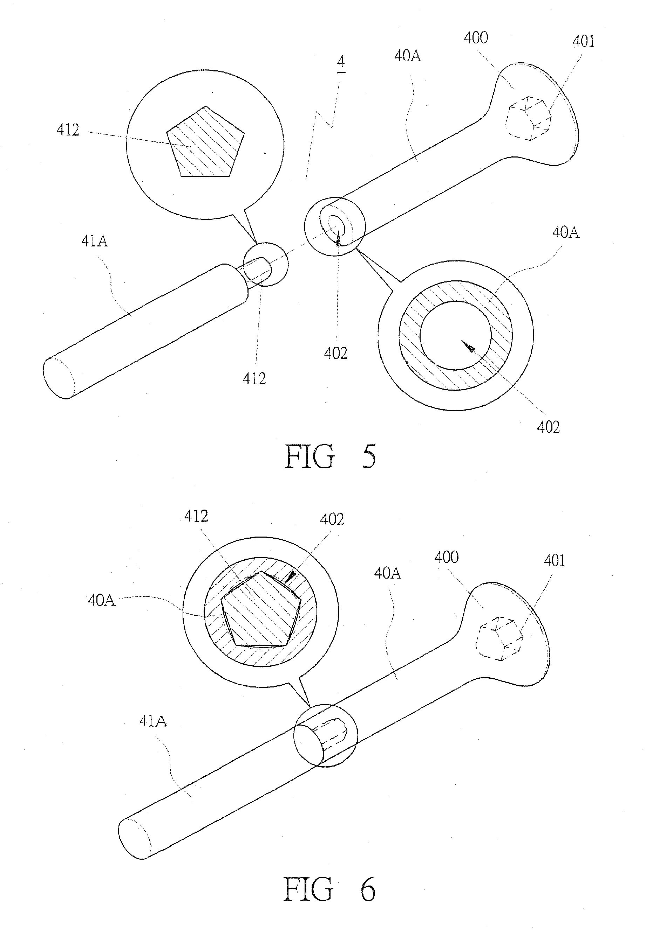

A first preferred embodiment of a self-tapping screw 4 made of composite material in the present invention, as shown in Figs. 5 to 9, includes a first shank 40 and a second shank 41 combined together.

The first shank 40 whose blank 40A is made of stainless steel is provided with a locking head 400 bored with a tool locking recess 401 with different shapes for matching with different kinds of hand tools. The first shank 40 further has its lower end bored with a circular combining recess 402.

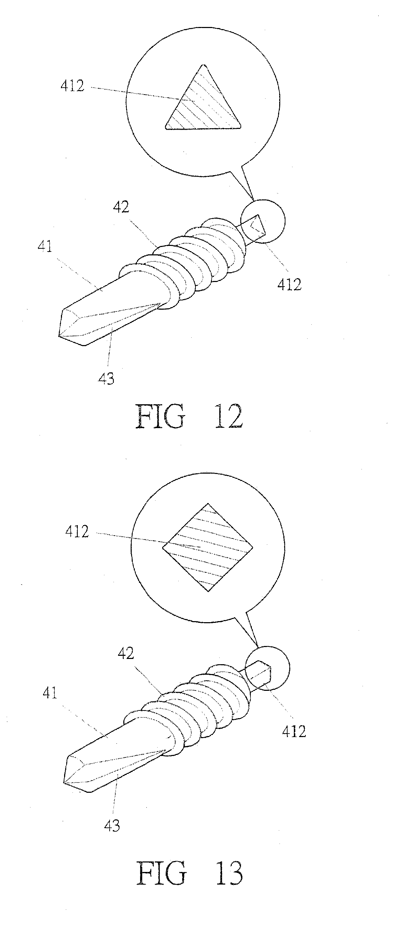

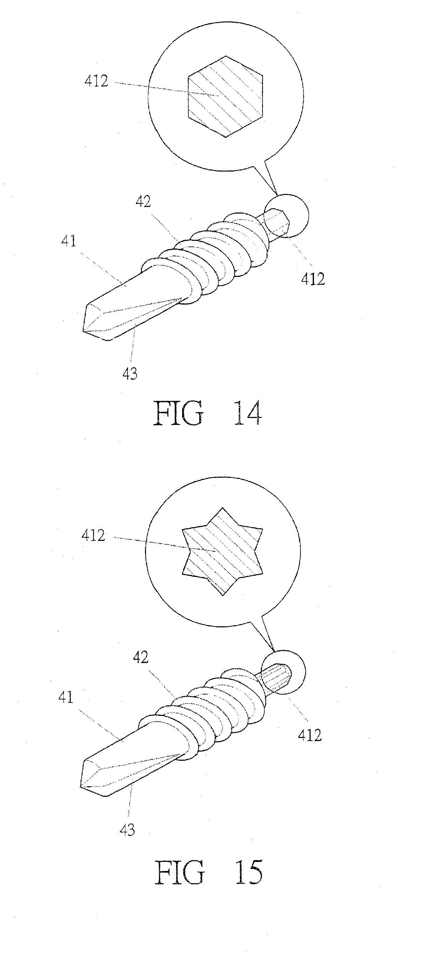

The second shank 41 made of low carbon steel, low carbon alloy steel or other kinds of steel suitable for carburizing and hardening treatment has the upper end of its blank 41A disposed with a polygonal combining member 412. The combining member 412 can be shaped as a pentagon shown in Figs. 5 and 6, a triangle shown in Fig. 12, a tetragon shown in Fig. 13, a hexagon or a heptagon or an octagon shown in Fig. 14, or a star-shape shown in Fig. 15 so long as the combining member 412 can be forcedly combined together with the combining recess 402 of the first shank 40.

To manufacture a self-tapping screw made of composite material, as shown in Fig. 6, the blank 40A of the first shank 40 and the blank 41A of the second shank 41 are first combined together. As mentioned above, the first shank 40 is made of stainless steel while the second shank 41 is made of low carbon steel, low carbon alloy steel or other kinds of steel suitable for carburizing and hardening treatment, that is, they are made of different materials, and the second shank 41 has a higher hardness than the first shank 40. Therefore, when the combining recess 402 of the first shank 40 and the combining member 412 of the second shank 41 are combined together, the combining member 412 of the second shank 41 will forcedly make the interior of the combining recess 402 of the first shank 40 to form a shape similar to that of the combining member 412 to enable the first shank 40 and the second shank 41 to be tightly combined together and not easy to be disconnected from each other.

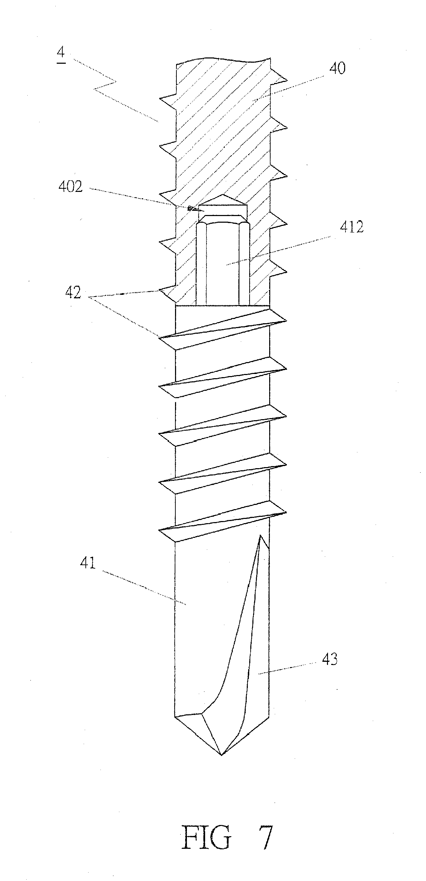

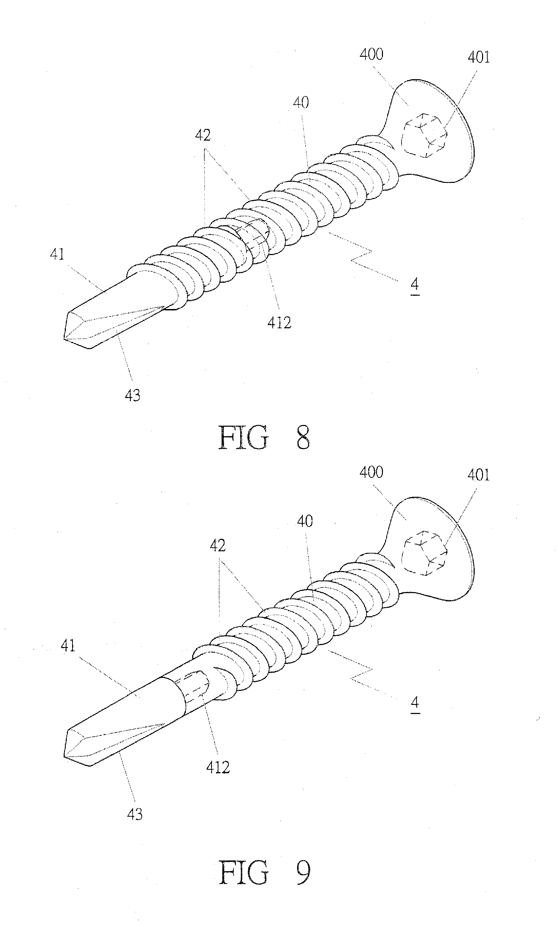

After the blank 40A of the first shank 40 and the blank 41A of the second shank 41 are combined together to form the whole blank of a self-tapping screw, as shown in Fig. 6, the first shank 40 and the second shrank 41 can be processed to make up a threaded member 42 thereon, and the second shank 41 has its lower end disposed with a cutting member 43, as shown in Figs. 7 and 8, or only the first shank 40 is processed to form the threaded member 42 and the second shank 41 is provided with a cutting member 43, as shown in Fig. 9, in accordance with practical needs of a manufacturer. Thus, the self-tapping screw made of composite material of this invention is free of the drawbacks of the conventional self-tapping screw that needs to be processed for a second time for removing welding burr and is likely to cause breakage in the course of locking.

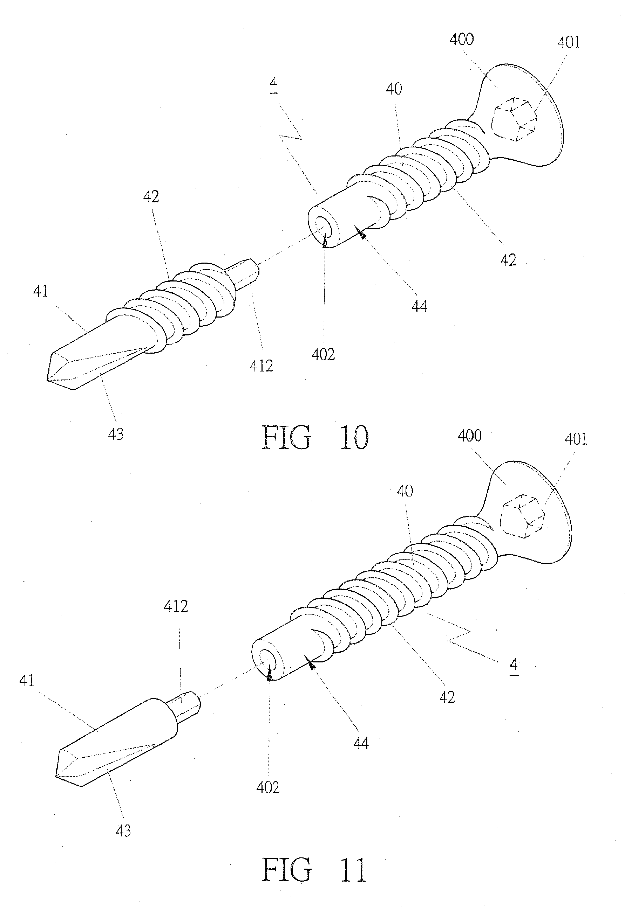

A second preferred embodiment of a self-drilling screw made composite material in the present invention, as shown in Figs. 10 and 11, includes a first shank 40 and a second shank 41 combined together.

The first shank 40 made of stainless steel is provided with a combining head 400, a threaded member 42 and a non-threaded member 44. The combining head 400 is bored with a tool locking recess 401 with different shapes for matching with different kinds of hand tools. The first shank 40 further has its lower end bored with a circular combining recess 402.

The second shank is made of low carbon steel, low carbon alloy steel or other kinds of steel suitable for carburizing and hardening treatment, and provided with a cutting member 43 and a polygonal combining member 412. The combining member 412 can be shaped as a pentagon shown in Figs. 10 and 11, a triangle shown in Fig. 12, a tetragon shown in Fig. 13, a hexagon or a heptagon or an octagon shown in Fig. 14, or a star-shape shown in Fig. 15 so long as the combining member 412 of the second shank 41 can be forcedly combined together with the combining recess 402 of the first shank 40. In addition, the second shank 41 can be provided with the threaded member 42, as shown in Fig. 10, or provided with no threaded member, as shown in Fig. 11.

Thus, the combining recess 402 of the first shank 40 and the combining member 412 of the second shank 41 can be firmly combined together, as shown in Fig. 7. The first shank 40 is made of stainless steel while the second shank 41 is made of low carbon steel, low carbon alloy steel or other kinds of steel suitable for carburizing and hardening treatment, that is, they are made of different materials, and the second shank 41 has a higher hardness than that of the first shank 40. Therefore, when the combining recess 402 of the first shank 40 and the combining member 412 of the second shank 41 are combined together, the combining member 412 of the second shank 41 will force the interior of the combining recess 402 of the first shank 40 to form a shape resembling that of the combining member 412, so that the first shank 40 and the second shank 41 can be tightly and closely combined together and cannot easily be disconnected from each other. By so designing, the self-tapping screw made of composite material in the present invention can get rid of the defects of the conventional self-tapping screw that needs to carry out second-time processing for removing welding burr and also is likely to cause breakage in the course of locking.

Thus, the cutting member 43 of the second shank 41 is used for cutting a work piece and the thread member 42 is to be tightly locked in the work piece, and the stainless steel combining head 400 of the first shank 40, exposed to the outside of the work piece, is not easy to be rusted and corroded by acid and alkaline produced in the external environment; therefore, the self-tapping screw can be firmly locked in the work piece for a long time.

While the preferred embodiments of the invention have been described above, it will be recognized and understood that various modifications may be made therein and the appended claims are intended to cover all such modifications that may fall within the spirit and scope of the invention.

## Claims

1. A self-tapping screw made of composite material comprising:
a first shank made of stainless steel and provided with a locking head bored with a tool-locking recess, said first shank bored with a circular combining recess; and
A second shank made of low carbon steel, low carbon alloy steel or other kinds of steel suitable for carburizing and hardening treatment, said second shank provided with a cutting member and a combining member, said combining member of said second shank firmly combined together with said tool-locking recess of said first shank to make up said self-tapping screw.

2. The self-tapping screw made of composite material as claimed in Claim 1, wherein said first shank and said second shank are processed to make up thread members after they are combined together.

3. The self-tapping screw made of composite material as claimed in Claim 1, wherein said first shank is processed and provided with a threaded member while said second shank is processed to make up a cutting member after said first shank and said second shank are combined together.

4. The self-tapping screw made of composite material as claimed in Claim 1, wherein said combining member of said second shank is shaped as a polygon.

5. The self-tapping screw made of composite material as claimed in Claim 1, wherein said combining member of said second shank is shaped as a pentagon.

6. The self-tapping screw made of composite material as claimed in Claim 1, where said combining member of said second shank is shaped as a triangle.

7. The self-tapping screw made of composite material as claimed in Claim 1, wherein said combining member of said second shank is shaped as a tetragon.

8. The self-tapping screw made of composite material as claimed in Claim 1, wherein said combining member of said second shank is shaped as a hexagon.

9. The self-tapping screw made of composite material as claimed in Claim 1, wherein said combining member of said second shank is shaped as a heptagon.

10. The self-tapping screw made of composite material as claimed in Claim 1, wherein said combining member of said second shank is shaped as an octagon.

11. A self-tapping screw made of composite material comprising:
a first shank made of stainless steel and disposed with a locking head, a threaded member and a non-threaded member, said locking head bored with a tool locking recess, said first shank further bored with a circular combining recess; and
a second shank made of low carbon steel, low carbon alloy steel or other kinds of steel suitable for carburizing and hardening treatment, said second shank provided with a cutting member and a combining member, said combining member of said second shank tightly combined together with said combining recess of said first shank to make up said self-tapping screw.

12. The self-tapping screw made of composite material as claimed in Claim 11, wherein said second shank is provided with a cutting member, a combining member and a threaded member.
